# EUROPÄISCHE PATENTSCHRIFT

(11) **EP 1 420 873 B1**
(45) Veröffentlichungstag und Bekanntmachung des Hinweises auf die Patenterteilung: **26.03.2008**
(21) Anmeldenummer: 02760121.0
(22) Anmeldetag: 15.08.2002
(51) Int. Cl.: B01D 53/94, F01N 3/20

(54) **VERFAHREN UND VORRICHTUNG ZUR SPEICHERUNG UND DOSIERUNG EINES REDUKTIONSMITTELS**
METHOD AND DEVICE FOR STORING AND DOSING A REDUCING AGENT
ENSEMBLE ET PROCEDE DE STOCKAGE ET DE DOSAGE D'UN AGENT DE REDUCTION

(30) Priorität: 18.08.2001 DE 10140614; 13.11.2001 DE 10155675
(43) Veröffentlichungstag der Anmeldung: 26.05.2004
(73) Patentinhaber: ROBERT BOSCH GMBH, 70442 Stuttgart (DE)
(72) Erfinder: RIPPER, Wolfgang, 70327 Stuttgart (DE); SCHALLER, Johannes, 71229 Leonberg (DE); BUERGLIN, Markus, 71254 Ditzingen (DE); MAYER, Thorsten, 67551 Worms (DE); FISCHER, Stefan, 96215 Lichtenfels (DE)
(86) Internationale Anmeldenummer: PCT/DE2002/003043
(87) Internationale Veröffentlichungsnummer: WO 2003/018177

(56) Entgegenhaltungen:
- EP-A- 0 381 236
- EP-A- 1 092 466
- EP-A- 1 199 449
- WO-A-99/01205
- DE-U- 29 708 591
- JP-A- 8 203 741
- US-A- 6 122 909
- PATENT ABSTRACTS OF JAPAN vol. 015, no. 007 (C-0794), 9. Januar 1991 (1991-01-09) & JP 02 258017 A (BABCOCK HITACHI KK), 18. Oktober 1990 (1990-10-18)
- PATENT ABSTRACTS OF JAPAN vol. 2000, no. 23, 10. Februar 2001 (2001-02-10) & JP 2001 152831 A (ISUZU MOTORS LTD), 5. Juni 2001 (2001-06-05)
- ANONYMOUS: "Selective Catalytic Reduction" DIESELNET TECHNOLOGY GUIDE, XX, XX, [Online] August 2000 (2000-08), Seiten 1-12, XP002163384 Gefunden im Internet: <URL:www.dieselnet.com>

## Beschreibung

Die vorliegende Erfindung betrifft eine Vorrichtung und ein Verfahren zur Speicherung und Dosierung eines Reduktionsmittels bzw. eine Einrichtung zur Speicherung eines Reduktionsmittels nach den Oberbegriffen der unabhängigen Patentansprüche.

### Stand der Technik

Als Folge der in den letzten Jahren stets niedriger anzusetzenden Schadstoffgrenzwerte sind zahlreiche Vorrichtungen und Verfahren zur Nachbehandlung von Abgasen von Brennkraftmaschinen entwickelt worden. Beispielsweise mittels Katalysatorsystemen, welche ammoniakhaltige Reduktionsmittel zur NOₓ-Konvertierung verwenden, sind effiziente Abgasnachbehandlungssysteme zur Verfügung gestellt.

Um eine Verminderung von NOₓ-Bestandteilen in Abgasen zu erzielen, wurden insbesondere für Dieselmotoren Reduktionskatalysatoren entwickelt. Hier unterscheidet man üblicherweise zwischen sogenannten SCR-Katalysatoren (engl. Selective Catalytic Reduction) und sogenannten Speicherkatalysatoren. An SCR-Katalysatoren reagieren die Stickoxide selektiv mit einem Reduktionsmittel. Die NOₓ-Reduktion erfolgt im Temperaturarbeitsbereich des Katalysators kontinuierlich. Ammoniak ist das Reduktionsmittel mit höchster Selektivität. Ammoniak kann in einem Kraftfahrzeug beispielsweise aus Harnstoff gewonnen werden, während Speicherkatalysatoren beispielsweise NOₓ als Nitrat einspeichern und periodisch mit Kohlenwasserstoffen des mitgeführten Brennkraftmaschinen-Brennstoffs in sogenannten Abgasfettphasen regeneriert werden.

Aus der EP-A-0381236 ist ein System bekannt, bei dem mittels Druckluft eine Harnstoff-Wasser-Lösung zum Entfernen von Stickoxiden den Abgasen aus einem Dieselmotor zudosiert wird. Die Harnstoff-Wasser-Lösung muß jedoch hierbei erst über einen zusätzlichen chemischen Prozeß in Ammoniak umgesetzt werden, wodurch der Wirkungsgrad des Verfahrens verschlechtert wird und unerwünschte Nebenprodukte nicht ausgeschlossen werden können.

Im Rahmen der SCR-Technologie ist es ebenfalls bekannt, weitere ammoniakhaltige Ausgangsstoffe wie Ammoniumkarbonat oder auch Ammoniakwasser zu verwenden. Sämtlichen bekannten Verfahren ist jedoch gemeinsam, daß Ammoniak aufgrund seiner schweren Handhabbarkeit nicht direkt eingesetzt wird.

Als weitere Nachteile bei der Verwendung von ammoniakhaltigen Ausgangsstoffen ergeben sich beispielsweise relativ geringe massebezogene Reduktionsleistungen und gegebenenfalls eine eingeschränkte Wintertauglichkeit, wodurch entsprechende zusätzliche Maßnahmen erforderlich werden.

Aus der US 6,122,909 sind Vorrichtungen und Verfahren zur katalytischen Reduktion von Emissionen von Verbrennungsmotoren bekannt. Hier ist unter anderem erwähnt, dass im Rahmen von SCR-Verfahren Ammoniak in die Abgase eingebracht werden kann, um unter Einschaltung eines Katalysators mit Stickoxiden zur Bildung von Stickstoff und Wasser zu reagieren. Es wird hierbei jedoch festgestellt, dass Ammoniak ein giftiges Gas darstellt und der Einsatz von Ammoniak in SCR-Systemen mit großem Aufwand verbunden ist.

Die EP 10 92 466 A beschreibt eine Einrichtung zur Erzeugung eines gasförmigen Reduktionsmittels für die katalytische Abgasreinigung unter Verwendung eines Reduktionsmittelpresskörpers.

Die JP 02 258 017 A beschreibt ebenfalls den Einsatz eines zunächst in fester Phase vorliegenden Reduktionsmittels.

Die EP 1 199 449 A nach Artikel 54(3) EPÜ beschreibt auch eine Vorrichtung und ein Verfahren zur katalytischen Reduktion von Emissionen von Verbrennungsmotoren.

Die Erfindung strebt daher an, in möglichst unaufwendiger Weise einen direkten Einsatz von Ammoniak oder anderer bislang relativ schwer handhabbarer Reduktionsmittel im Rahmen von SCR-Verfahren zu ermöglichen.

Dieses Ziel wird erreicht mit einer Vorrichtung bzw. Einrichtung sowie einem Verfahren mit den Merkmalen der unabhängigen Ansprüche.

### Vorteile der Erfindung

Durch die erfindungsgemäß nun mögliche Verwendung beispielsweise von reinem Ammoniak als Reduktionsmittel bei SCR-Verfahren werden gegenüber herkömmlichen Ausführungen derartiger Verfahren höhere Wirkungsgrade erzielt, Nebenprodukte vermieden und eine erhöhte massebezogene Reduktionsleistung realisiert.

Die erfindungsgemäße Lösung erlaubt eine sehr anwenderfreundliche Betankung des Reduktionsmittels und ermöglicht eine einfach zu realisierende Logistik.

Dabei wird das Reduktionsmittel, insbesondere Ammoniak, in einer auswechselbaren Kartusche bevorratet. Die Kartusche weist in vorteilhafter Weise ein Sicherheitsventil auf, welches bei Einführen der Kartusche in ihre Position in den sie umgebenden bzw. haltenden Behälter automatisch öffenbar ist. Durch Vorsehen eines derartigen Sicherheitsventils ist ein besonders sicherer Einsatz bzw. eine besonders einfache Auswechslung von Kartuschen möglich.

Bevorzugte Ausführungsformen des erfindungsgemäßen Verfahrens bzw. der erfindungsgemäßen Vorrichtung und Einrichtung sind Gegenstand der Unteransprüche.

Zweckmäßigerweise sind der Behälter und/oder die Kartusche als Druck- bzw. Sicherheitsbehälter ausgebildet. Typische auszuhaltende Drücke betragen bis zu 60 bar oder auch höher, so dass das Vorsehen entsprechender Druckbehälter die Sicherheit des Systems gewährleistet.

Es erweist sich ferner als zweckmäßig, zusätzlich zu dem Sicherheitsventil an der Kartusche einen Sicherheitsverschluss vorzusehen. Dieser kann beispielsweise vor Einbringung in den Behälter mittels einer manuellen Verdrehung in den entsicherten Zustand gebracht werden, wobei auch eine andere Bewegungsrichtung denkbar ist. Auch eine automatische Verdrehung, z.B. bei Einführung der Kartusche in den Behälter, ist denkbar.

Gemäß einer bevorzugten Ausführungsform der erfindungsgemäßen Vorrichtung weist der Behälter eine Klappe auf, mittels der die Kartusche in ihrer Position innerhalb des Behälters festlegbar bzw. sicherbar ist. Eine derartige Klappe kann vorteilhafterweise auf ihrer Innenseite mit einer Ausnehmung ausgebildet sein, in welche ein Griff der Kartusche hineinragen kann. Bei Öffnung der Klappe ist somit ein besonders einfaches Einführen bzw. Herausziehen der Kartusche möglich.

Es ist bevorzugt, daß der Behälter und/oder die Kartusche erwärmbar, insbesondere mittels Motorkühlwasser beaufschlagbar ist. Beispielsweise kann der Behälter mit hohlen Wandungen ausgebildet sein, in welche Motorkühlwasser einbringbar ist. Mit dieser Maßnahme ist es beispielsweise möglich, die Kartusche bzw. deren Inhalt auf eine geeignete Temperatur, beispielsweise 60 C, 40°C oder auch 0°C, zu erwärmen (zur Bereitstellung konstanter Druckverhältnisse wird eine Temperatur von 60°C bevorzugt), wodurch die Förderung von Reduktionsmittel, insbesondere Ammoniak, zwischen der Kartusche und der Dosiereinrichtung unterstützt wird, wobei wenigstens ein Teil des Reduktionsmittels mittels der Erwärmung in den gasförmigen Zustand überführbar ist, so daß eine Gasdosierung durchführbar ist. Es ist jedoch eine andere Temperatur denkbar, die zu einem positiven Druckverhältnis führt.

Es ist bevorzugt, daß die Speichereinrichtung und die Dosiereinrichtung über eine insbesondere mittels eines Drucksensors überwachbare Leitung zum Transport von Reduktionsmittel miteinander kommunizieren. Die Dosierung des Reduktionsmittels kann entweder als Flüssig- oder Gasdosierung, oder auch als Flüssig-Gas-Dosierung durchgeführt werden. Mittels des Drucksensors ist ein zweckmäßigerweise einzustellender konstanter Systemdruck, beispielsweise von 1,8 bar, in einfacher Weise überprüfbar. Bei einer Flüssigdosierung gelangt das Reduktionsmittel in flüssiger Form mit dem in der Kartusche bzw. in dem Behälter herrschenden Druck zur Dosiereinheit. Dies bedingt, daß die Dosiermenge in Abhängigkeit des vorliegenden Drucks korrigiert werden muß. Ein Drucksensor kann auch zur Überwachung dieses Systemdrucks verwendet werden.

Die die Speichereinrichtung und die Dosiereinrichtung miteinander verbindende Leitung ist zweckmäßigerweise doppelwandig, und gegebenenfalls mit Isolationsmitteln ausgefüllt.

Zweckmäßigerweise ist auch die Dosiereinrichtung mittels Motorkühlwasser beaufschlagbar. Hierbei kann beispielsweise ein im Rahmen der Dosiereinrichtung verwendetes Dosierventil mit hohlen Wandungen ausgebildet sein, in welche Kühlwasser einbringbar ist. Alternativ hierzu kann die Dosiereinrichtung auch mit Kühlmitteln ausgebildet sein, mittels welchen eine übermäßige Wärmeübertragung von dem Abgasrohr, auf welchem die Dosiereinrichtung zweckmäßigerweise positioniert ist, kompensierbar ist. Zweckmäßigerweise ist eine Isolierschicht zwischen der Dosiereinrichtung und dem Abgasrohr ausgebildet.

Es erweist sich als zweckmäßig, einen in dem äußeren Behälter oder der Kartusche ausgebildeten Druckminderer vorzusehen. Ein Druckminderer ist insbesondere dazu geeignet, in der Kartusche flüssiggelagertes Reduktionsmittel wenigstens teilweise, insbesondere vollständig, in den gasförmigen Zustand zu überführen.

Es erweist sich insbesondere das Vorsehen eines Überdruckventils als vorteilhaft, um eine plötzliche Freisetzung des gesamten im Kraftfahrzeug mitgeführten Ammoniaks in flüssiger und/oder gasförmiger Form zu verhindern, was insbesondere bei einem Unfall lebensgefährlich werden kann. Dadurch werden insbesondere Situationen vermieden, in denen Ammoniak in konzentrierter Form in die freie Umgebung gebracht wird, was zu gefährlichen Ansammlungen giftigen und entzündlichen Materials führen würde. Darüber hinaus wird in zuverlässiger Weise ein Bersten des Druckbehälters infolge des Überschreitens eines maximal zulässigen Betriebsdrucks vermieden. Ein solcher Druckanstieg kann beispielsweise durch Erwärmen des Behälters über die zulässige Betriebstemperatur hinaus infolge eines Brandes erfolgen. Wird in solchen Situationen das Reduktionsmittel rechtzeitig in kleinen Mengen über das Überdruckventil abgelassen, so wird ein überkritischer Druckanstieg zuverlässig vermieden und ein Bersten des Behälters ausgeschlossen.

Gemäß einer bevorzugten Ausführungsform des erfindungsgemäßen Verfahrens wird als Reduktionsmittel Ammoniak verwendet. Die Verwendung von Ammoniak im Rahmen einer katalytischen Abgasreinigung erweist sich als besonders effektiv. Mit dem erfindungsgemäßen Verfahren ist eine sichere Handhabung dieses herkömmlicherweise als zu gefährlich für mobile Anwendungen angesehenen Stoffes zur Verfügung gestellt. Eine bevorzugte Ausführungsform der erfindungsgemäßen Vorrichtung wird nun anhand der beigefügten Zeichnungen näher erläutert.

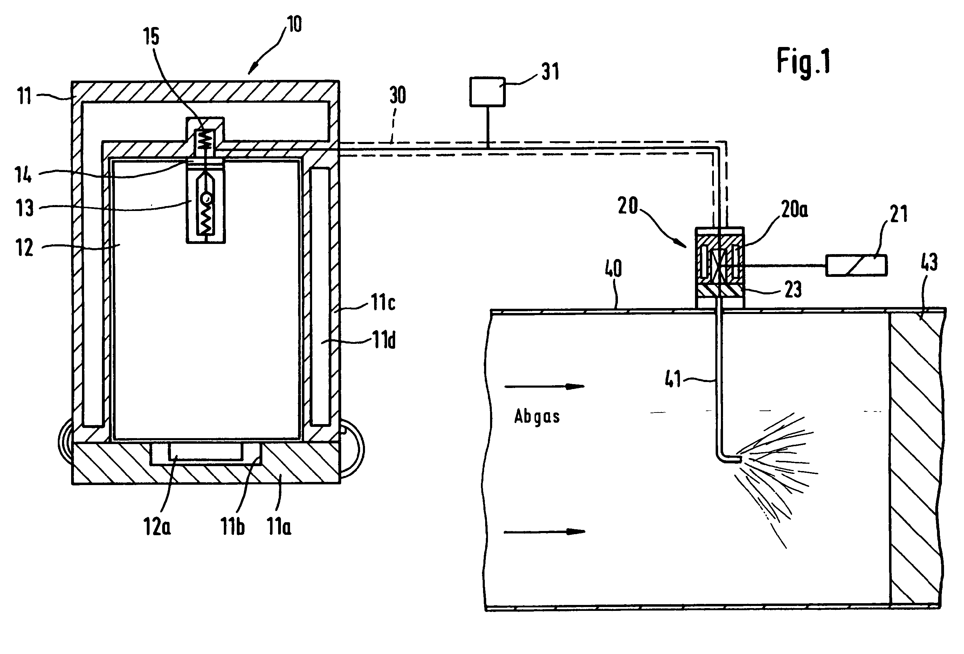

Figur 1 zeigt eine schematische Schnittansicht einer bevorzugten Ausführungsform der erfindungsgemäßen Vorrichtung.

Drei wesentliche Komponenten der erfindungsgemäßen Vorrichtung sind eine Speichereinrichtung zur Speicherung des verwendeten Reduktionsmittels, im dargestellten Ausführungsbeispiel Ammoniak, welche hier insgesamt mit 10 bezeichnet ist, eine Dosiereinrichtung zur Beaufschlagung des zu reinigenden bzw. behandelnden Abgases mit dem verwendeten Reduktionsmittel, hier mit 20 bezeichnet, sowie eine die Komponenten 10 und 20 miteinander verbindende Druckleitung, hier mit 30 bezeichnet.

Die Speichereinrichtung 10 weist einen äußeren beheizbaren Sicherheitsbehälter 11, und eine in diesen einführbare und auswechselbare Kartusche 12 auf. Der Sicherheitsbehälter 11 ist mit einem verschwenkbaren Deckel 11a ausgebildet, mittels dessen die eingeführte Kartusche 12 in dem Sicherheitsbehälter 11 positionierbar bzw. fixierbar ist. Die Klappe 11a weist eine Ausnehmung 11b auf, in welche in der verschlossenen Anordnung aus Sicherheitsgründen ein Griff 12a der Kartusche 12 hineinragt. Es ist ebenfalls denkbar, durch entsprechende Formung der Behälterinnenwand diese zur Führung und axialen Positionierung der Kartusche zu verwenden. Mittels des Griffes 12a ist eine Einführung bzw. ein Herausziehen der Kartusche 12 aus dem Sicherheitsbehälter 11 in einfacher Weise bewerkstelligbar. Der Sicherheitsbehälter 11 ist mit Hohlwänden 11c ausgebildet, in deren Hohlräume 11d Motorkühlwasser zum Beheizen der Kartusche auf ca. 60°C einbringbar ist.

Die Kartusche 12 ist mit einem Sicherheitsventil 13 und mit einem Sicherheitsverschluß 14 ausgebildet. Vor Einführung der Kartusche in den Sicherheitsbehälter 11 ist der Sicherheitsverschluß beispielsweise mittels einer 90°-Drehung manuell entriegelbar. Die Öffnung des Sicherheitsventils erfolgt automatisch beim Einschieben der Kartusche in einen als Druckminderer 15 ausgebildeten Bereich des Sicherheitsbehälters 11.

Durch Öffnung des Sicherheitsventils 13 kann Ammoniak über den Druckminderer 15 und die Druckleitung 30 auf die Dosiereinrichtung 20 strömen. Die Dosiereinrichtung 20 ist mittels einer entsprechenden Steuereinrichtung 21 steuerbar. Die Dosiereinrichtung 20 kann, ähnlich wie der Sicherheitsbehälter 11, mit Hohlwänden 20a ausgebildet sein, so dass die Dosiereinrichtung 20 mit Kühlwasser beaufschlagbar ist.

Der Druckminderer 15 ermöglicht die Überführung des zweckmäßigerweise teilweise in flüssiger Form in der Kartusche gelagerten Reduktionsmittels in die Gasform, wodurch eine Gasdosierung in einfacher Weise realisierbar ist. Der Druckminderer dient zur Reduzierung des Druckes, wobei der eigentliche Übergang von der flüssigen zur gasförmigen Phase über konkrete Druck- und Temperaturänderungen erfolgt. Es sei der Vollständigkeit halber darauf hingewiesen, dass im Behälter zweckmäßigerweise stets ein gasförmiger Anteil vorhanden ist. Bei einer (hier nicht dargestellten) Flüssigdosierung gelangt das Reduktionsmittel ohne Zwischenschaltung eines Druckminderers über die Verbindungsleitung mit dem Tankdruck bzw. Kartuschendruck zur Dosiereinheit. Dies bedingt, daß die Dosiermenge in Abhängigkeit des vorliegenden Drucks korrigiert werden muß. Zu diesem Zwecke ist die Druckleitung 30 zweckmäßigerweise mittels eines Drucksensors 31 zur Überwachung des Systemdrucks überwachbar. Es ist ebenfalls möglich, den Systemdruck über einen Druckregler konstant zu halten. Die Druckleitung kann aus Sicherheitsgründen doppelwandig ausgeführt und bei Bedarf isoliert sein.

Die Dosiereinrichtung 20 ist auf einem Abgasrohr 40, durch welches das zu behandelnde Abgas strömt, fest aufgebracht. Die Dosiereinrichtung kann auch am Rahmen angebracht sein und eine kurze, in das Abgasrohr hineinragende Dosierleitung aufweisen. Hierdurch können thermische Belastungen vermindert werden. Mittels der Dosiereinrichtung dosiertes Reduktionsmittel wird über ein Eindüsrohr 41 gasförmig in das Abgas eingebracht.

Die Dosiereinheit besteht zweckmäßigerweise aus einem oder mehreren Dosierventilen, welche bei Bedarf mit Motorkühlwasser gekühlt sein können und gegenüber der Wärme des Abgasrohres mit Hilfe eines Isolierflansches oder eines Zwischenrohres abgekoppelt werden.

Bei Bedarf ist der Einsatz von mehreren Dosierventilen und Eindüsrohren zur Verbesserung der Durchmischung von Reduktionsmittel, insbesondere Ammoniak, mit Abgas möglich.

Zweckmäßigerweise ist zwischen dem Dosierventil 20 und dem Abgasrohr 40 eine Isolation 23 vorgesehen, um das Dosierventil von der Abgaswärme zu isolieren.

Man erkennt, daß das mittels des eingeführten Reduktionsmittels, hier Ammoniak, beaufschlagte Abgas einem Katalysator 43 zugeführt wird, an welchem an sich bekannte katalytische Abgasbehandlungen durchführbar sind.

Ein wesentlicher Vorteil bei Verwendung der erfindungsgemäßen Vorrichtung und zur Durchführung des erfindungsgemäßen Verfahrens besteht in einer reduzierten Anzahl von Systemkomponenten. Die erfindungsgemäße Vorrichtung gestattet eine anwenderfreundliche Betankung des Reduktionsmittels, so daß eine Logistik zur Bereitstellung von Ammoniak in einfacher Weise realisierbar ist. Die erfindungsgemäße Vorrichtung ist sowohl für Pkw als auch Nkw einsetzbar. Sie bietet eine verbesserte Wintertauglichkeit. Ferner entstehen keine Nebenprodukte bei der Ammoniakerzeugung. Es sind keine Funktionsstörungen durch Reduktionsmittelausscheidungen zu befürchten.

Die erfindungsgemäße Speichereinrichtung ist als System aus einer Kartusche und einem Sicherheitsbehälter ausgeführt. Der Sicherheitsbehälter kann druckfest ausgeführt sein, um die Sicherheit weiter zu erhöhen. Der Sicherheitsbehälter kann, wie bereits angedeutet wurde, beheizt oder unbeheizt ausgeführt sein, wobei vorzugsweise Motorkühlwasser zur Beheizung verwendet wird. Hierbei kann die in der Kartusche bzw. dem Behälter herrschende Temperatur zusätzlich geregelt sein.
Das Auswechseln der Kartuschen erfolgt dadurch, daß die Klappe 11a, welche zweckmäßigerweise als Schnellverschlußklappe ausgeführt ist, geöffnet wird, und die Kartusche 12 mittels eines Griffs durch Drehen aus ihrer Arretierung gelöst und herausgezogen wird. Es ist ebenfalls denkbar, dass die Kartusche mittels eines entsprechenden Mechanismus einrastet und per Längsbewegung gelöst werden kann. Beim Herausziehen schließt sich das Sicherheitsventil 13. Anschließend kann eine Austauschkartusche eingeschoben und arretiert werden, wobei beim Einschieben wieder das Sicherheitsventil 13 automatisch geöffnet wird.

Am Beispiel von Ammoniak seien abschließend verschiedene Speichermöglichkeiten beschrieben. Bei Bereitstellung von flüssigem Ammoniak mit einem Gasanteil entspricht der in der Kartusche herrschende Druck dem Dampfdruck, welche eine Funktion der in der Kartusche herrschenden Temperatur ist. Als typische Druckbereiche sind 1,9 bar bei -20°C bis 26,1 bar bei +60°C anzugeben.

Als zusätzliche Maßnahme ist es möglich, die Kartusche bzw. Speichereinrichtung zu beheizen, beispielsweise mittels des Motorkühlwassers auf +60°C. Mit dieser Maßnahme ist es möglich, den in der Kartusche bzw. der Speichereinrichtung herrschenden Druck konstant beispielsweise auf 26,1 bar einzustellen.

Bei Speicherung von flüssigem Ammoniak ohne Gasanteil wird vorzugsweise als Kartusche ein Membranspeicher-Tank verwendet. Hierbei ist der Kartuschendruck größer als der Dampfdruck, beispielsweise wird bei einem Systemdruck von 46 bar das Ammoniak bis zu einer Temperatur von 85°C in der flüssigen Phase gehalten.

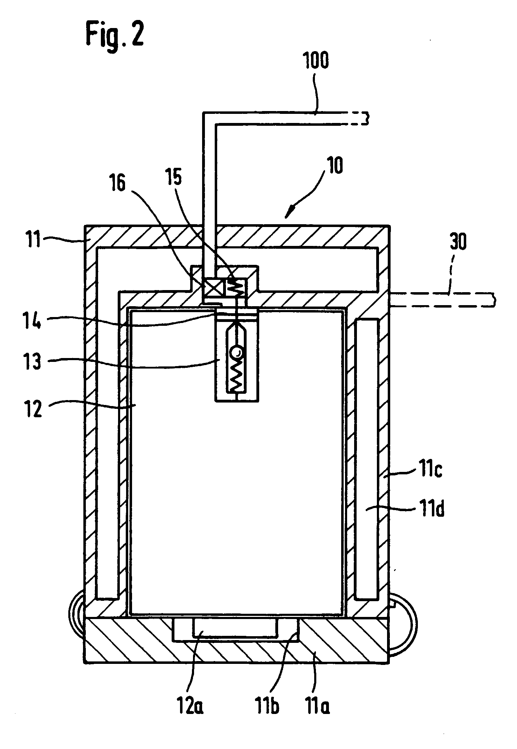

Die Figur 2 zeigt eine alternative Ausführungsform der Speichereinrichtung 10. Gleiche Bestandteile wie in der in Figur 1 abgebildeten Vorrichtung sind mit gleichen Bezugszeichen versehen und werden nicht nochmals beschrieben. Die Speichereinrichtung weist ein Sicherheitsbeziehungsweise Überdruckventil 16 auf. Dieses Überdruckventil 16 ist im Sicherheitsbehälter 11 integriert.

Es ist neben dem Druckminderer 15 angeordnet und steht parallel zu letzterem mit dem Sicherheitsverschluß 14 in Verbindung. Auf der dem Sicherheitsverschluß abgewandten Seite ist das Ventil 16 mit einer Leitung 100 verbunden, die stromaufwärts des Katalysators 43 in die Abgasleitung 40 mündet (der Anschluß der Leitung 100 an die Abgasleitung 40 ist in Figur 2 nicht dargestellt).

Das Überdruckventil 16 öffnet, wenn der Innendruck der Kartusche beispielsweise infolge äusserer Hitzeeinwirkung den maximalen Betriebsdruck der Kartusche überschreitet. Dann wird das ausströmende Ammoniak in den Abgasstrom geleitet, wo es im Bereich des Katalysators zumindest teilweise verbrennen kann. So kann ein Bersten der Kartusche beziehungsweise des Sicherheitsbehälters infolge eines Überschreitens des maximalen Betriebsdrucks ausgeschlossen werden werden. Das von dem durch das Überdruckventil ausgeblasenen Ammoniak ausgehende Gefährdungspotential ist im Vergleich zu einem Bersten des Behälters niedrig, da der Druckspeicherinhalt nur allmählich geleert wird und somit eine höhere Verdünnung des NH₃ mit Umgebungsluft erfolgen kann.

Statt im Sicherheitsbehälter kann das Überdruckventil 16 auch in der Kartusche selbst integriert sein. Alternativ können auch zwei oder mehr zusammengeschaltete Sicherheitsbehälter mit jeweils einer Kartusche vorgesehen sein, die optional jeweils mit einem Überdruckventil 16 ausgestattet sind. Die zugeordneten Leitungen 100 können hierbei separat oder über eine Sammelleitung in die Abgasleitung 40 münden. Alternativ können die Leitungen 100 auch einfach ins Freie führen, so dass überschüssiges Ammoniak zur Vermeidung einer Notfallsituation auf der Strasse abgelassen wird.

## Patentansprüche

1. Vorrichtung zur Speicherung und Dosierung von im Rahmen einer katalytischen Abgasnachbehandlung verwendbarer Reduktionsmittel mit einer Einrichtung (10) zur Speicherung des zu dosierenden Reduktionsmittels, und einer Dosiereinrichtung (20) zur Beaufschlagung des zu behandelnden Abgases mit dem Reduktionsmittel, wobei die Einrichtung (10) zur Speicherung des Reduktionsmittels mindestens einen äußeren Behälter (11) und eine in diesem auswechselbar positionierbare, das Reduktionsmittel enthaltende Kartusche (12) aufweist, wobei die Kartusche (12) ein Sicherheitsventil (13) aufweist, welches bei Einführung der Kartusche (12) in ihre Position in dem Behälter (11) automatisch geöffnet wird, und wobei das Reduktionsmittel in der Kartusche (12) zumindest teilweise in flüssiger Form gelagert werden kann.

2. Vorrichtung nach Anspruch 1, **dadurch gekennzeichnet, dass** der Behälter (11) und/oder die Kartusche (12) als Druck- bzw. Sicherheitsbehälter ausgebildet sind.

3. Vorrichtung nach einem der vorstehenden Ansprüche, **gekennzeichnet durch** einen an der Kartusche (12) vorgesehenen Sicherheitsverschluss (14).

4. Vorrichtung nach einem der vorstehenden Ansprüche, **dadurch gekennzeichnet, dass** der Behälter (11) eine Klappe (11a) aufweist, mittels der die Kartusche (12) an ihre Position innerhalb des Behälters (11) sicherbar ist.

5. Vorrichtung nach einem der vorstehenden Ansprüche, **dadurch gekennzeichnet, dass** der Behälter (11) und/oder die Kartusche (12) erwärmbar, insbesondere mittels Motorkühlwasser beaufschlagbar sind.

6. Vorrichtung nach einem der vorstehenden Ansprüche, **dadurch gekennzeichnet, dass** die Speichereinrichtung (10) und die Dosiereinrichtung (20) über eine insbesondere mittels eines Drucksensors (31) überwachbare Leitung (30) zum Transport von Reduktionsmittel miteinander kommunizieren.

7. Vorrichtung nach einem der vorstehenden Ansprüche, **dadurch gekennzeichnet, dass** die Dosiereinrichtung (20) mittels Motorkühlwasser oder einem anderen Kühlmedium, insbesondere Dieselkraftstoff, beaufschlagbar ist.

8. Vorrichtung nach einem der vorstehenden Ansprüche, **gekennzeichnet durch** einen in dem äußeren Behälter (11) oder an der Kartusche (12) vorgesehenen Druckminderer (15).

9. Vorrichtung nach einem der vorhergehenden Ansprüche, **dadurch gekennzeichnet, dass** mindestens ein Überdruckventil (16) in der Einrichtung (10) integriert ist.

10. Vorrichtung nach Anspruch 9, **dadurch gekennzeichnet, dass** das Überdruckventil (16) in dem mindestens einen äußeren Behälter (11) integriert ist.

11. Vorrichtung nach Anspruch 9 oder 10, **dadurch gekennzeichnet, dass** die Kartusche (12) bei Überschreiten eines maximal zulässigen Betriebsdrucks der Kartusche (12) über das Überdruckventil (16) mit einer Leitung (100) verbindbar ist zum Abführen überschüssigen Reduktionsmittels.

12. Verfahren zur Speicherung und Dosierung von im Rahmen einer katalytischen Abgasnachbehandlung verwendbarem Reduktionsmittel, **gekennzeichnet durch** die Verwendung einer Vorrichtung nach einem der vorstehenden Ansprüche.

13. Verfahren nach Anspruch 12, **dadurch gekennzeichnet, dass** als Reduktionsmittel direkt in das zu behandelnde Abgas eingespritztes Ammoniak verwendet wird.

## Claims

1. Device for storing and dosing reducing agent which can be used within the context of catalytic exhaust-gas aftertreatment, having a device (10) for storing the reducing agent which is to be dosed, and having a dosing device (20) for imparting the reducing agent to the exhaust gas which is to be treated, with the device (10) for storing the reducing agent having at least one outer container (11) and a cartridge (12) which can be positioned in an exchangeable fashion in said outer container (11) and contains the reducing agent, with the cartridge (12) having a safety valve (13) which is automatically opened as the cartridge (12) is inserted into its position in the container (11), and with it being possible for the reducing agent to be stored in the cartridge (12) at least partially in liquid form.

2. Device according to Claim 1, **characterized in that** the container (11) and/or the cartridge (12) are embodied as pressure containers or safety containers.

3. Device according to one of the preceding claims, **characterized by** a safety closure (14) which is provided on the cartridge (12).

4. Device according to one of the preceding claims, **characterized in that** the container (11) has a flap (11a), by means of which the cartridge (12) can be secured at its position within the container (11).

5. Device according to one of the preceding claims, **characterized in that** the container (11) and/or the cartridge (12) can be heated, in particular acted on by means of engine cooling water.

6. Device according to one of the preceding claims, **characterized in that** the storage device (10) and the dosing device (20) communicate with one another by means of a line (30), which can in particular be monitored by means of a pressure sensor (31), for transporting reducing agent.

7. Device according to one of the preceding claims, **characterized in that** the dosing device (20) can be acted on by means of engine cooling water or another cooling medium, in particular diesel fuel.

8. Device according to one of the preceding claims, **characterized by** a pressure reducer (15) which is provided in the outer container (11) or on the cartridge (12).

9. Device according to one of the preceding claims, **characterized in that** at least one overpressure valve (16) is integrated in the device (10).

10. Device according to Claim 9, **characterized in that** the overpressure valve (16) is integrated in the at least one outer container (11).

11. Device according to Claim 9 or 10, **characterized in that**, in the event of an exceedance of a maximum permissible operating pressure of the cartridge (12), the cartridge (12) can be connected by means of the overpressure valve (16) to a line (100) for dissipating excess reducing agent.

12. Method for storing and dosing reducing agent which can be used within the context of catalytic exhaust-gas aftertreatment, **characterized by** the use of a device according to one of the preceding claims.

13. Method according to Claim 12, **characterized in that** ammonia, which is injected directly into the exhaust gas which is to be treated, is used as reducing agent.

## Revendications

1. Dispositif de stockage et de dosage d'un agent réducteur utilisé dans le cadre d'un post-traitement catalytique de gaz d'échappement comprenant une installation (10) pour stocker l'agent réducteur à doser et une installation de dosage (20) pour appliquer l'agent réducteur aux gaz d'échappement à traiter,
l'installation (10) de stockage de l'agent réducteur comprenant au moins un réservoir extérieur (11) et une cartouche (12) contenant l'agent réducteur, cette cartouche pouvant être positionnée de manière interchangeable,
la cartouche (12) ayant une soupape de sécurité (13) qui, lors de la mise en place de la cartouche (12) dans le réservoir (11) s'ouvre automatiquement et l'agent réducteur est stocké au moins partiellement à l'état liquide dans la cartouche (12).

2. Dispositif selon la revendication 1,
**caractérisé en ce que**
le réservoir (11) et/ou la cartouche (12) sont des réservoirs de pression ou de sécurité.

3. Dispositif selon l'une des revendications précédentes,
**caractérisé par**
une fermeture de sécurité (14) équipant la cartouche (12).

4. Dispositif selon l'une des revendications précédentes,
**caractérisé en ce que**
le réservoir (11) comporte un capuchon (11a) par lequel la cartouche (12) se fixe dans sa place dans le réservoir (11).

5. Dispositif selon l'une des revendications précédentes,
**caractérisé en ce que**
le réservoir (11) et/ou la cartouche (12) peuvent être réchauffés notamment par l'eau de refroidissement du moteur.

6. Dispositif selon l'une des revendications précédentes,
**caractérisé en ce que**
l'installation de stockage (10) et l'installation de dosage (20) communiquent par une conduite (30) surveillée notamment par un capteur de pression (31) pour le transport de l'agent réducteur.

7. Dispositif selon l'une des revendications précédentes,
**caractérisé en ce que**
l'installation de dosage (20) est mise en oeuvre avec de l'eau de refroidissement du moteur ou un autre fluide de refroidissement, notamment du gazole.

8. Dispositif selon l'une des revendications précédentes,
**caractérisé en ce que**
le réservoir extérieur (1) ou la cartouche (12) comporte un réducteur de pression (15).

9. Dispositif selon l'une quelconque des revendications précédentes,
**caractérisé en ce qu'**
au moins une soupape de surpression (16) est intégrée à l'installation (10).

10. Dispositif selon la revendication 9,
**caractérisé en ce que**
la soupape de surpression (16) est intégrée dans au moins un réservoir extérieur (11).

11. Dispositif selon la revendication 9 ou 10,
**caractérisé en ce qu'**
en cas de dépassement de la pression de fonctionnement maximale autorisée de la cartouche (12), la soupape de surpression (16) relié cette cartouche (12) à une conduite (100) pour évacuer l'agent réducteur excédentaire.

12. Procédé de stockage et de dosage d'agents réducteurs utilisables dans le cadre d'un post-traitement catalytique de gaz d'échappement,
**caractérisé par**
l'utilisation d'un dispositif selon l'une des revendications précédentes.

13. Procédé selon la revendication 12,
**caractérisé en ce que**
l'agent réducteur est de l'ammoniac injecté directement dans les gaz d'échappement à traiter.
